# EUROPEAN PATENT SPECIFICATION

(11) **EP 3 284 662 B1**
(45) Date of publication and mention of the grant of the patent: **08.04.2020**
(21) Application number: 17186322.8
(22) Date of filing: 15.08.2017
(51) Int. Cl.: B62D 35/00

(54) **AERODYNAMIC PANEL FOR A ROAD HAULAGE TRAILER AND VEHICLE**
AERODYNAMISCHES PANEEL FÜR EINEN STRASSENTRANSPORTANHÄNGER UND KRAFTFAHRZEUG
PANNEAU AÉRODYNAMIQUE DESTINÉ À UNE REMORQUE DE TRANSPORT ROUTIER ET VÉHICULE

(30) Priority: 15.08.2016 GB 201613943
(43) Date of publication of application: 21.02.2018
(73) Proprietor: Bacon, Andrew, Sandy, Bedfordshire SG19 1SB (GB)
(72) Inventor: Bacon, Andrew, Sandy, Bedfordshire SG19 1SB (GB)
(74) Representative: McWilliams, David John

(56) References cited:
- WO-A1-2010/026442
- WO-A2-2004/062953
- WO-A2-2014/162158
- US-A- 4 343 506

## Description

The present invention relates to an aerodynamic panel of the kind intended for use on a road haulage trailer or the like. The present invention also relates to a road vehicle having an aerodynamic panel. The present invention also has application for other road vehicles, such as buses, coaches and vans.

Document WO 2014/162158 A2 discloses an aerodynamic panel for a road haulage trailer, the panel comprising a first end, a second end, an upper edge, a lower edge, and a recessed airflow region located between said first and second ends and between said upper and lower edges; wherein the panel has a front surface intended to be upright in use; the recessed airflow region including a base wall set back from said front surface and extending from said front surface towards said second end of the panel. The recessed airflow region includes an upper side wall, a lower side wall, and wherein the base wall extends between said upper and lower walls, wherein the recessed airflow region terminates at the second end of the panel, to define an open end of channel-shaped cross-section.

GB2271323 shows a conventional road haulage vehicle, in the form of a tractor unit and a trailer pulled by the tractor unit and arranged for articulation relative to the tractor unit, e.g. via a fifth wheel coupling.

Aerodynamic improvement of such vehicles has proven difficult to achieve, typically due to the gap between the trailer and tractor (required to allow articulation between the tractor unit and trailer when turning etc).

The disclosure of GB2271323 seeks to find aerodynamic improvements for such vehicles, e.g. aerodynamic improvements that do not significantly reduce payload.

Figure 4 of GB2271323 shows an area at the rear end of the trailer, wherein a skirt, located behind the wheels and extending down from the chassis, defines air guidance surfaces intended to contribute to aerodynamic efficiency improvements of the trailer in use.

The present invention seeks to provide improvements or advantageous alternatives to the modifications shown in Figure 4 of GB2271323.

According to a first aspect of the invention there is provided an aerodynamic panel for use on a road haulage trailer, the panel having: a first end, a second end, an upper edge, a lower edge, and a recessed airflow region located between said first and second ends and between said upper and lower edges; wherein the panel has a front surface intended to be upright in use; wherein the recessed airflow region includes a base wall set back from said front surface and extending from said front surface towards said second end of the panel; wherein the recessed airflow region includes an upper side wall, a lower side wall, and wherein the base wall extends between said upper and lower side walls, wherein at least one of the upper side wall or lower side wall defines a curved surface extending the length of the recessed region; wherein said curved surface has a width extending between said base wall and said front surface, said width increasing along the length of the recessed region, in a direction towards said second end of the panel, and wherein the recessed airflow region terminates at the second end of the panel, to define an open end of channel-shaped cross-section.

If the lower side wall defines a curved surface extending the length of the recessed region, a significant proportion of, e.g. substantially the entire length, of the length of said curved surface may define a generally upward curvature, in a direction away from said second end of the panel.

The depth of the recessed region may decrease along its length, in a direction from the second end of the panel.

The base wall and side wall of the recessed airflow region may define an airflow outlet at the second end of the panel.

The upper edge may define a continuous plane surface.

The lower edge may include first and second plane surfaces. First plane surface may extend parallel with the upper edge, and the second plane surface may define an upward slope towards said second end of the panel.

The first and second plane surfaces of the lower edge may define first and second regions of the panel, respectively, the first region adjacent said first end of the panel, and the second region adjacent the second end of the panel. The recessed airflow region may be provided in said second region.

The recessed airflow region may extend for substantially the entire length of the second region.

The first and second regions may each define a plane outer surface. The plane outer surfaces may be coplanar.

The upper and lower walls may define opposing side walls of said channel-shaped cross-section at said open end.

The upper wall may define a straight surface, extending substantially along the entire length of the recessed airflow region, whereas the curvature of the lower wall may follow a waveform which extends in a generally upward direction from said open end of the panel, such that the distance between said upper and lower walls decreases along the length of said lower wall from said open end of the panel.

The upper edge may define a straight surface, extending along the entire length of the recessed airflow region, whereas the curvature of the lower wall may follow a waveform which extends in a generally upward direction from said open end of the panel, such that the distance between said upper edge and said lower wall decreases along the length of said lower wall from said open end of the panel.

The base wall of the recessed airflow region may extend in a plane generally orthogonal to the plane of the upper or lower edges of the panel.

The base wall of the recessed airflow region may extend in a plane generally orthogonal to the plane of the lower wall of the recessed airflow region.

The base wall of the recessed airflow region may be angled relative to the outer surfaces of the first and second regions of the panel.

The upper wall of the recessed airflow region may define an overhang above the curved surface of the lower wall.

The upper and lower walls may define opposing side walls of said channel-shaped cross-section at said open end. The upper and lower walls may cooperate to define a wish-bone shaped profile or periphery for said recessed airflow region.

The upper and lower walls may define opposing side walls of said channel-shaped cross-section at said open end. The upper and lower walls may each follow the curved profile, starting at the second end of the panel, and converging at a location distal the second end of the panel.

The upper and lower walls may follow corresponding curvature.

The recessed airflow region may have a symmetrical profile.

The upper and lower walls may follow a straight path along an initial section of their length, starting from the second end of the panel.

The length of the straight portion, terminating at said second end of the panel, may be between 15-30% of the length of the recessed region or upper wall or lower wall.

The straight section of each of said upper and lower walls may be parallel with one another.

The base wall of the recessed airflow region may extend in a plane generally orthogonal to the plane of the upper or lower edges of the panel.

The base wall of the recessed airflow region may extend in a plane generally orthogonal to the plane of the lower wall of the recess.

The base wall may follow a curvature along its length, in a direction from said open end.

According to a second aspect of the invention, there is provided a trailer for a road haulage vehicle, the trailer comprising a wheeled chassis and a box-type container body, the wheel chassis including at least one axle having a pair of wheels, so that one wheel is associated with each side of the trailer, and the container body defining two side walls of the trailer and a roof extending between the two side walls; wherein the trailer further comprises a panel according to the first aspect, wherein the panel is located on one side of the trailer, below the container body and behind the rearmost wheel on the respective side of the vehicle.

According to a third aspect of the invention, there is provided a road haulage vehicle, the vehicle comprising a wheeled chassis and a box-type container body, the wheel chassis including at least one axle having a pair of wheels, so that one wheel is associated with each side of the vehicle, and the container body defining two side walls of the vehicle and a roof extending between the two side walls; wherein the vehicle further comprises a panel according to the first aspect, wherein the panel is located on one side of the vehicle, below the container body and behind the rearmost wheel on the respective side of the vehicle, wherein the base wall of said panel extends from its front surface to a distal end of the panel at the rear end of the vehicle; the width of the curved surface of said panel increases in a direction towards the rear end of the vehicle; and wherein the recessed region of said panel defines an airflow outlet at the rear end of the vehicle, for directing a flow of air captured by the airflow region to a region behind the vehicle.

The recessed region may define an airflow outlet at the rear end of the vehicle, for directing a flow of air captured by the airflow region to a region behind the vehicle.

Other aspects and features of the invention will be apparent from the claims and the following description of exemplary embodiments, made with reference to the accompanying drawings, in which:
Figure 1 is a schematic perspective view of an aerodynamic panel according to a first embodiment;
Figure 2 shows the panel of Figure 1 in plan view;
Figure 3 shows the panel of Figure 1 from the front;
Figure 4 shows the panel of Figure 1 from an open end (from the right as viewed in Figure 3);
Figure 5 is a schematic perspective view of an aerodynamic panel according to a second embodiment;
Figure 6 shows the panel of Figure 5 in plan view;
Figure 7 shows the panel of Figure 5 from the front;
Figure 8 shows the panel of Figure 5 from an open end (from the right as viewed in Figure 7);
Figure 9 is a schematic perspective view of an aerodynamic panel according to a third embodiment;
Figure 10 shows the panel of Figure 9 in plan view;
Figure 11 shows the panel of Figure 9 from the front;
Figure 12 shows the panel of Figure 9 from an open end (from the right as viewed in Figure 11);
Figure 13 is a schematic perspective view of an aerodynamic panel according to a fourth embodiment;
Figure 14 shows the panel of Figure 13 in plan view;
Figure 15 shows the panel of Figure 13 from the front;
Figure 16 shows the panel of Figure 13 from an open end (from the right as viewed in Figure 15);
Figure 17 is a schematic perspective view of an aerodynamic panel according to a fifth embodiment;
Figure 18 shows the panel of Figure 17 in plan view;
Figure 19 shows the panel of Figure 17 from the front;
Figure 20 shows the panel of Figure 17 from an open end (from the right as viewed in Figure 19);
Figure 21 is a schematic perspective view of the rear end of a road haulage vehicle,
incorporating an embodiment of aerodynamic panel;
Figure 22 is a schematic side view of the rear end of the road haulage vehicle of Figure 21;
Figure 23 is a schematic perspective view of the rear end of a road haulage vehicle, incorporating an embodiment of aerodynamic panel; and
Figure 24 is a schematic side view of the rear end of the road haulage vehicle of Figure 23.

Conventional trailers for articulated road haulage vehicles often define a box-shaped body or container mounted on a wheeled chassis. An example is shown in GB2271323.

During movement of the vehicle at speed, the area under the box-shaped body generates significant aerodynamic drag which has a negative impact on the fuel efficiency of the vehicle.

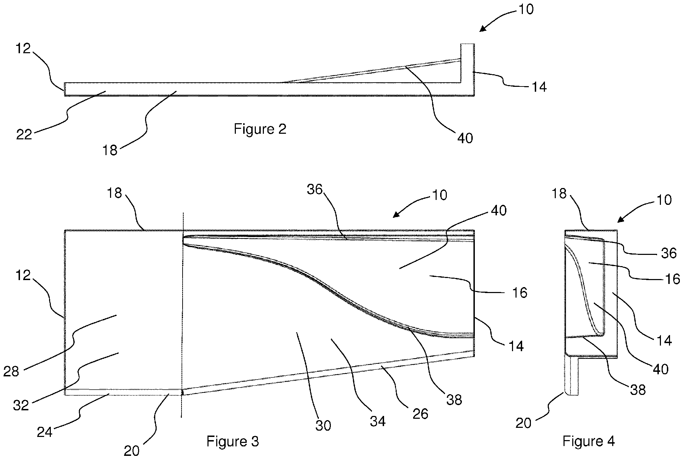

In an attempt to promote cleaner airflow alongside such trailers, it is known to provide panels (sometimes referred to as skirts) extending down from the chassis (i.e. below the level of the box-shaped body) adjacent the wheels. Typically, the panels in front of and between the wheels on each side of the vehicle each define a plane outer surface arranged to be generally parallel with the respective side wall of the body, effectively as an extension of the side walls of the body. This has been found to lead to aerodynamic improvements. Moreover, as shown in Figure 4 of GB2271323, it is known to provide similar such panels behind the rearmost wheels on each side. However, these rear panels or skirts commonly define a generally concave and inwardly tapering region, intended to direct airflow inwardly towards a region behind the trailer.

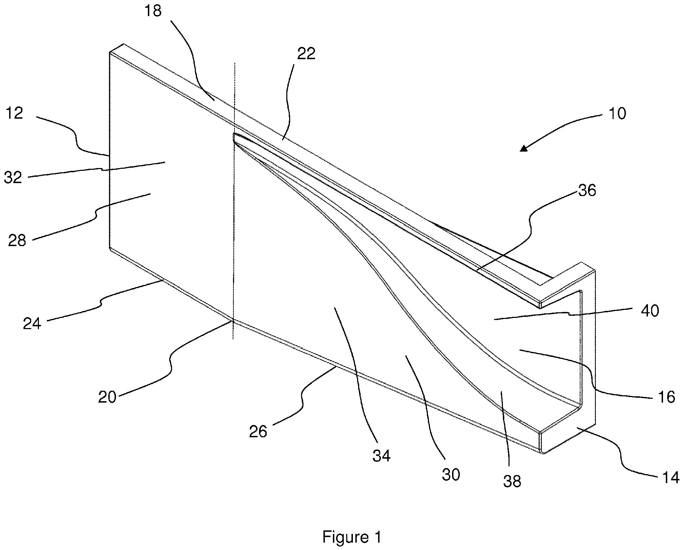

Referring now to Figure 1 to 4, an aerodynamic panel of a road haulage trailer is indicated generally at 10. The panel 10 is intended to be mounted below the box-shaped body of a road haulage trailer, specifically at a location behind the rearmost wheels on a respective side of the trailer, e.g. in a similar manner to the panel 56 shown in Figure 4 of GB2271323.

The panel 10 has first and second ends 12, 14. The first end 12 is intended to be located distal the rear end of a trailer, and the second end 14 is intended to be located adjacent the rear end of a trailer. The panel 10 also includes an airflow recess 16 arranged between said first and second ends.

The panel 10 has upper and lower edges 18, 20. The upper edge 18 defines a continuous plane surface 22, intended to be mounted below the box-shaped container body of a conventional road haulage trailer: In this embodiment, the lower edge 20 includes two plane surfaces 24, 26. The first plane surface 24 of the lower edge 20 is parallel with the continuous plane surface 22 of the upper edge 18, whereas the second plane surface 26 of the lower edge 20 defines an upwards slope of continuous gradient, which terminates at the second end 14 of the panel 10.

In this embodiment, the plane surfaces 24, 26, in effect, define a first region 28 adjacent said first end 12 of the panel 10, and a second region 30 adjacent the second end 14 of the panel 10. The dotted line in Figures 1 and 3 shows the delineation between the first and second regions 28, 30. The first and second regions 28, 30 each define a plane outer surface 32, 34, contiguous and co-planar with one another, and intended to be generally parallel with the side of a trailer, in use - e.g. effectively, as a direct extension or skirt depending from the side wall of the trailer.

In this embodiment, the recess 16 is provided in said second region 30. In this embodiment, the recess 16 extends for substantially the entire length of the second region 30 (right to left, as viewed in Figures 1 and 3).

In this embodiment, the recess 16 includes an upper wall 36, a lower wall 38, and a base wall 40 extending between said upper and lower walls 36, 38. The recess 16 terminates at the second end 14 of the panel 10, to define an open end of channel-shaped cross-section (wherein said upper and lower walls 36, 38 define opposing side walls of said channel-shaped cross-section at said open end). In this embodiment, the channel is generally rectilinear (although the upper and lower walls are slightly divergent, rather than strictly parallel, due to a mould draft angle).

As can be seen, the upper wall 36 defines a straight surface, extending substantially along the entire length of the second region 30, whereas the lower wall 38 defines a substantially curved surface extending between said open end of the recess 16 to an opposing end of said recess 16.

The curvature of the lower wall 38 follows a waveform which extends in a generally upward direction from said open end (e.g. relative to said upper edge 18), said curvature extending substantially along the entire length of the lower wall, in this embodiment. The resulting effect is that the distance between said upper and lower walls 36, 38 decreases along the length of said lower wall between said open end to said opposing end.

The base wall 40 of the recess 16 is intended to be generally vertical, in use. To that end, the base wall 40 extends in a plane generally orthogonal to the plane of the upper or lower edges 18, 20 of the panel 10 (or generally orthogonal to the plane of the upper and lower walls of the recess, for strictly rectilinear channel-shaped recesses 16). However, the panel 10 is further configured so that the curved surface of the lower wall 38 has a width which decreases along the length of the recess 16, in a direction from said open end to said opposing end. Hence, the vertical plane of the recess base wall 40 is angled relative to the co-planar outer surfaces 32, 34 of the first and second regions 28, 30 of the panel 110. The base wall 40 may be straight or follow a curve, both options resulting in a taper or reduction in depth of the recess 16 along its length, in a direction from the open end.

This type of configuration of panel 10 has been found to provide advantageous airflow capture, compared to the effects provided by the recessed region shown in the rearmost panel 56 in Figure 4 of GB2271323.

In plan view from above, e.g. as shown in Figure 2, the panel 10 defines an L-shape, where the long arm of the L is in the region of ten times as long as the short arm of the L. Also, in this embodiment, the rear surface of the base wall 40 defines a triangle with said L-shape, by extending from a position distal the free end of the short arm of the L-shape to a position generally half way along the long arm of the L-shape.

It should be noted that the outer surface of the base wall 40 extends to a point on a plane contiguous with the front surfaces 32, 34 of the panel 10.

In an exemplary embodiment (e.g. of the kind shown in Figures 1 to 4), the length of the panel 10 (i.e. between the first and second ends 12, 14) is 2000mm, wherein the second region 30 has a length of 1500mm. The base wall 40 follows a taper in the region of 7 degrees, to a maximum depth at the second end 14 in the region of 200mm relative to the front surface 32 of the first region 28. Such dimensions and proportions have been found to be desirable.

The length of the first region 28 may sometimes be longer or shorter, dependent on the distance between the rearmost wheels and the rear end of the vehicle. As such, it may be necessary for the recessed region 16 to extend into the first region 28, in some embodiments. The height of the panel 10 will depend on the height of the chassis from the ground, since it is usual to ensure a clearance of in the region of 350mm between the lower edge 20 of the panel 10 and the road surface (to minimise the risk of damage to the panel, e.g. from debris thrown up during travel at speed). Typically, this means that the height of the panel 10 will be in the region of 750-850mm.

The slope defined at the lower edge of the panel, by the second region 30, may be omitted in some embodiments.

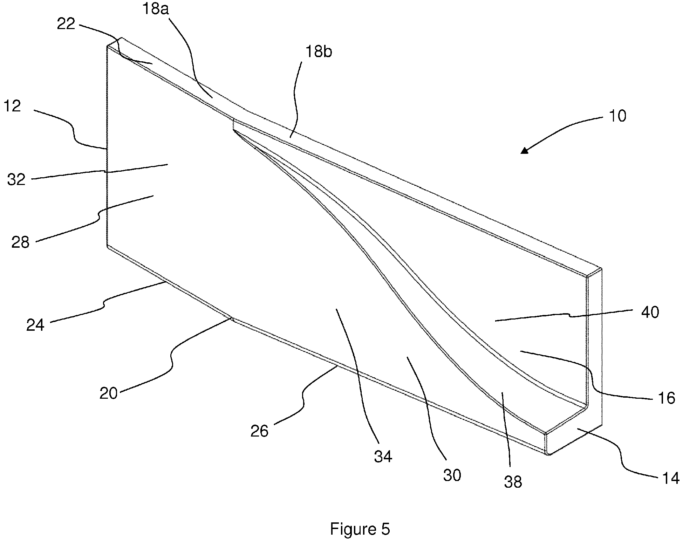

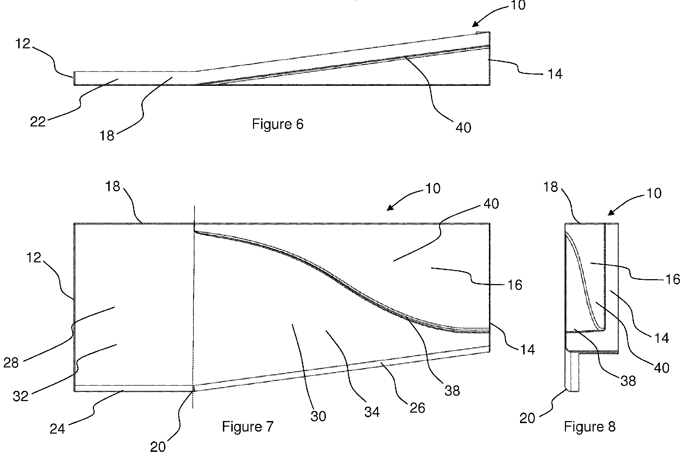

In the embodiment of Figures 1 to 4, the upper wall 36 of the recess 16 creates an overhang immediately above the curved surface of the lower wall 38. The distal end of the overhang is in the same plane as the outer surfaces 32, 34 of the panel 10. In other embodiments, the overhang is created by a part of the vehicle chassis or by the box-shaped container body on the chassis, in which case the panel 10 does not need to be provided with a recess 16 of channel-shaped cross-section. An example is shown in Figures 5 to 8, wherein the recess is effectively L-shaped (e.g. minus the upper wall 36 of the embodiment shown in Figures 1 to 4). As such, rather than the upper edge 18 of the panel 10 following a straight line along the entire length of the panel 10, the upper edge 18 is defined by first and second sections 18A, 18B, both of which are straight, but wherein second section 18B follows the path of the base wall 40 of the recess 16, and so is angled relative to the path of the first section 18A.

The airflow capture of panels having the type of configuration shown in Figures 5 to 8 is similarly advantageous to that which has been found with respect to panels of the type shown in Figures 1 to 4, when compared to the effects provided by the recessed region in the rearmost panel 56 shown in Figure 4 of GB2271323.

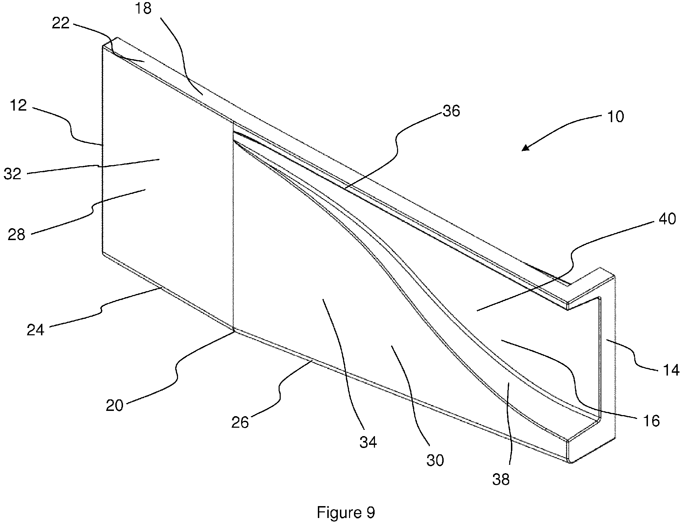

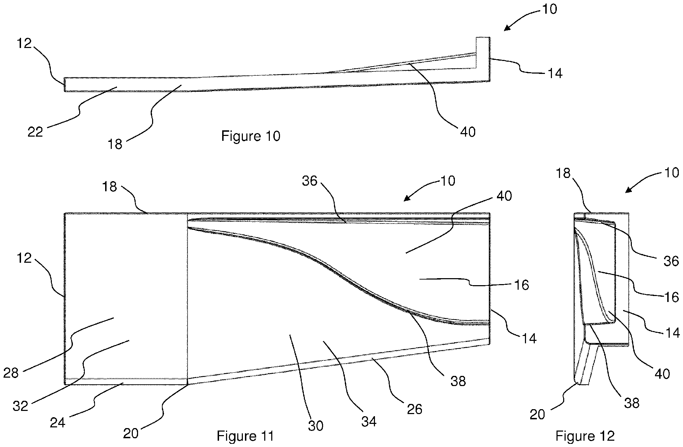

Similar advantageous airflow capture has also been found using panels of the type shown in Figures 9 to 12. These panels are substantially the same as the panels shown in Figures 1 to 4 and Figures 5 to 8. However, for these embodiments, the front and rear regions 28, 30 do not define co-planar surfaces. Rather, the outer surface 34 of the second region 30 is angled with respect to the outer surface 32 of the first region 28. Again, the recess may include an overhang/upper wall (e.g. as illustrated in Figures 1 to 4) or may have the overhang omitted (e.g. as illustrated in Figures 5 to 8) and instead provided by the trailer (e.g. by part of the chassis or the box-shaped container body).

In exemplary embodiments, the angle between the front plane of the first region and the front plane of the second region is in the range 0 degrees to 3.5 degrees.

For each of the embodiments described above, the curved lower wall 38 of the recess 16 may flow a substantially straight path for an initial period as it extends away from the (open) second end 14 of the panel 10. Typically, this straight section will be no more than a small proportion of the overall length of the lower wall, e.g. less than 1/10th of the length. The straight section might follow a generally upward path from said open end 14 (e.g. inclined relative to the upper edge 18 of the panel 10), or maybe generally parallel with the upper edge 18 of the panel 10 (e.g. so as to be generally horizontal, in use).

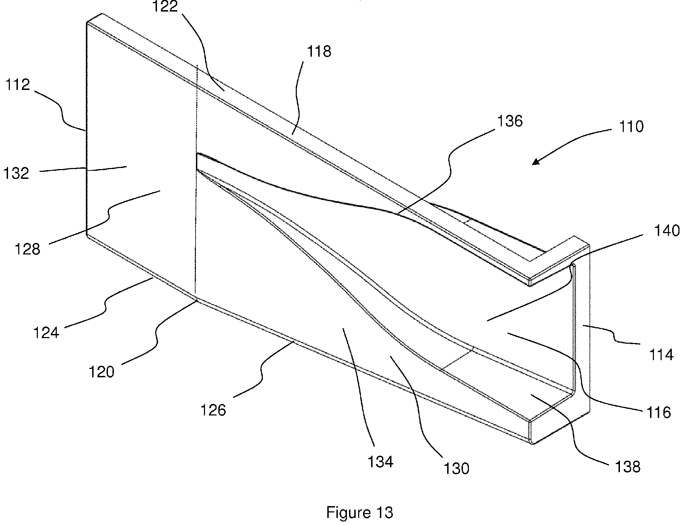

Figures 13 to 16 show another aerodynamic panel for a road haulage trailer, indicated generally at 110. The panel 110 is similar in many respects to the panel 10 of Figures 1 to 4, Figures 5 to 8, and Figures 9 to 12, not least in that the panel 110 is intended to be mounted below the box-shaped body of a road haulage trailer, specifically at a location behind the rearmost wheels on a respective side of the trailer, e.g. in a similar manner to the panel 56 shown in Figure 4 of GB2271323. Similar reference numerals are used in Figures 13 to 16, albeit with the suffix 1--.

The panel 110 has first and second ends 112, 114. The first end 112 is intended to be located distal the rear end of a trailer, and the second end 114 is intended to be located adjacent the rear end of a trailer. The panel 110 also includes an airflow recess 116 arranged between said first and second ends.

The panel 110 has upper and lower edges 118, 120. The upper edge 118 defines a continuous plane surface 122, intended to be mounted below the box-shaped container body of a conventional road haulage trailer: In this embodiment, the lower edge 120 includes two plane surfaces 124, 126. The first plane surface 124 of the lower edge 120 is parallel with the continuous plane surface 122 of the upper edge 18, whereas the second plane surface 126 of the lower edge 120 defines an upwards slope of continuous gradient, which terminates at the second end 114 of the panel 110.

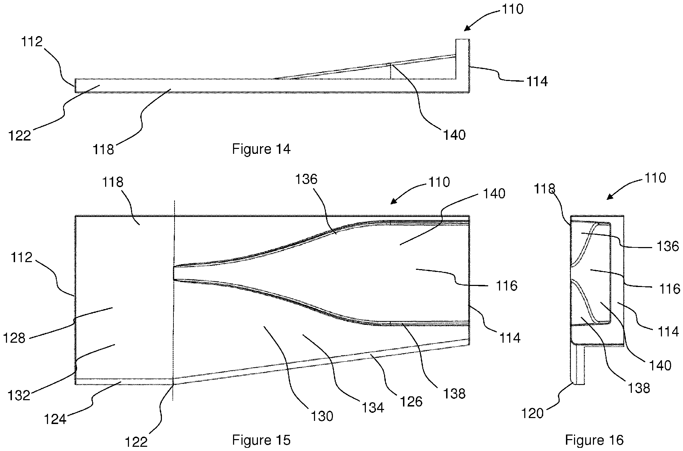

In this embodiment, the plane surfaces 124, 126, in effect, define a first region 128 adjacent said first end 112 of the panel 110, and a second region 130 adjacent the second end 114 of the panel 110. The dotted line in Figures 13 and 15 shows the delineation between the first and second regions 28, 30. The first and second regions 128, 130 each define a plane outer surface 132, 134, contiguous and coplanar with one another, and intended to be generally parallel with the side of a trailer, in use - e.g. effectively, as a direct extension or skirt depending from the side wall of the trailer.

In this embodiment, the recess 116 is provided in said second region 130. In this embodiment, the recess 116 extends for substantially the entire length of the second region 130 (right to left, as viewed in Figures 13 and 15).

In this embodiment, the recess 116 includes an upper wall 136, a lower wall 138, and a base wall 140 extending between said upper and lower walls 136, 138. The recess 116 terminates at the second end 114 of the panel 110, to define an open end of channel-shaped cross-section (wherein said upper and lower walls 136, 138 define opposing side walls of said channel-shaped cross-section at said open end). In this embodiment, the channel is generally rectilinear (although the upper and lower walls are slightly divergent, rather than strictly parallel).

As can be seen, the upper and lower walls 136, 138 cooperate to define a wish-bone shape, when viewing the front of the panel (e.g. as can be seen most clearly in Figure 15). Each wall 136, 138 follows the same curved profile as the other, albeit as a mirror image, starting at the second end 114 of the panel, and converging at a location distal the second end 114 of the panel 110.

Importantly, the walls 136, 138 follow a straight path (which may be generally parallel with, or slightly angled relative to, the upper edge 118 of the panel 110) along an initial section of their length, starting from the second end 114 of the panel 110. The length of the straight portion (terminating at said second end 114) is typically in the region of 15-30% of the length of the recessed region 116 or upper wall 136 or lower wall 138. In exemplary embodiments, the upper and lower walls 136, 138 are generally parallel along this section of their length.

The curvature of the upper wall 136 then follows a waveform which extends in a generally downward direction from said straight section (e.g. relative to said upper edge 118), whereas the curvature of the lower wall 138 follows a waveform which extends in a generally upward direction from said straight section (e.g. relative to said upper edge 118).

The base wall 140 of the recess 116 is intended to be generally vertical, in use. To that end, the base wall 140 extends in a plane generally orthogonal to the plane of the upper or lower edges 118, 120 of the panel 110 (or generally orthogonal to the plane of the upper and lower walls of the recess, for strictly rectilinear channel-shaped recesses 116). However, the panel 110 is further configured so that the curved surface of the upper and lower walls 136, 138 each has a width which decreases along the length of the recess 116, in a direction from said open end to said opposing end. Hence, the vertical plane of the recess base wall 140 is angled relative to the coplanar outer surfaces 132, 134 of the first and second regions 128, 130 of the panel 110. The base wall 140 may be straight or follow a curve, both options resulting in a taper or reduction in depth of the recess 116 along its length, in a direction from the open end.

This type of configuration of panel 10 has been found to provide advantageous airflow capture, compared to the effects provided by the recessed region in the rearmost panel 56 shown in Figure 4 of GB2271323.

In plan view from above, as shown in Figure 14, the panel 110 defines an L-shape, where the long arm of the L is at least ten times as long as the short arm of the L. Also, in this embodiment, the rear surface of the base wall 140 defines a triangle with said L-shape, by extending from a position distal the free end of the short arm of the L-shape to a position generally half way along the long arm of the L-shape.

It should be noted that the outer surface of the base wall 140 extends to a point on a plane contiguous with the front surfaces 132, 134 of the panel 110.

Again, in an exemplary embodiment (e.g. of the kind shown in Figures 13 to 16), the length of the panel 110 (i.e. between the first and second ends 112, 114) is 2000mm, wherein the second region 130 has a length of 1500mm. The base wall 140 follows a taper in the region of 7 degrees, to a maximum depth at the second end 114 in the region of 200mm relative to the front surface 132 of the first region 128. Such dimensions and proportions have been found to be desirable.

The length of the first region 128 may sometimes be longer or shorter, dependent on the distance between the rearmost wheels and the rear end of the vehicle. As such, it may be necessary for the recessed region 116 to extend into the first region 128, in some embodiments.

The height of the panel 110 will depend on the height of the chassis from the ground, since it is usual to ensure a clearance of in the region of 350mm between the lower edge 120 of the panel 110 and the road surface (to minimise the risk of damage to the panel, e.g. from debris thrown up during travel at speed). Typically, this means that the height of the panel 110 will be in the region of 750-850mm

The slope defined at the lower edge of the panel, by the second region 130, may be omitted in some embodiments.

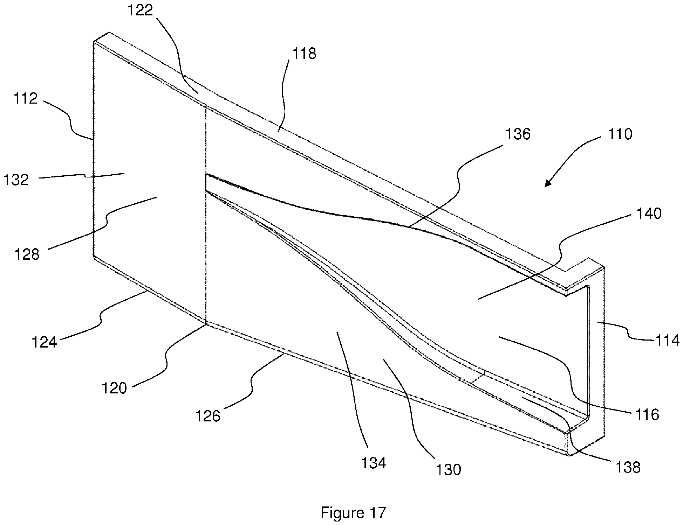

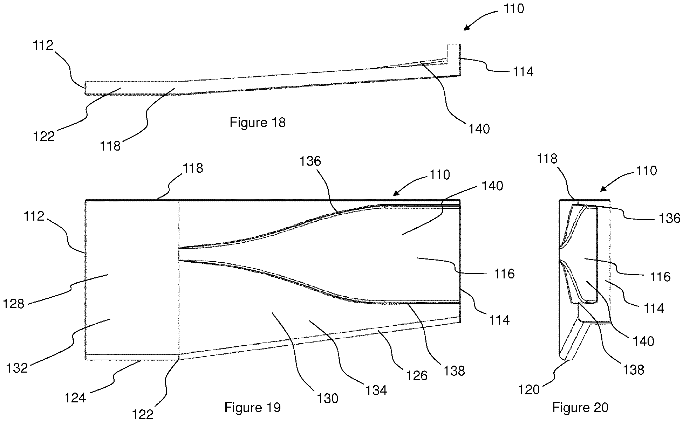

Similar advantageous airflow capture has also been found using panels of the type shown in Figures 17 to 20. These panels are substantially the same as the panels shown in Figures 13 to 16. However, for these embodiments, the front and rear regions 128, 130 do not define coplanar surfaces. Rather, the outer surface 134 of the second region 130 is angled with respect to the outer surface 132 of the first region 128.

In exemplary embodiments, the angle between the front plane of the first region and the front plane of the second region is in the range 0 degrees to 3.5 degrees.

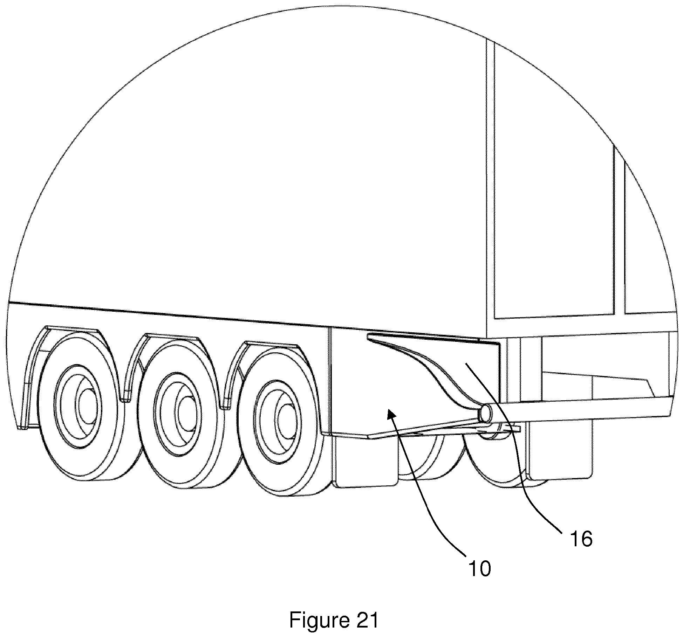

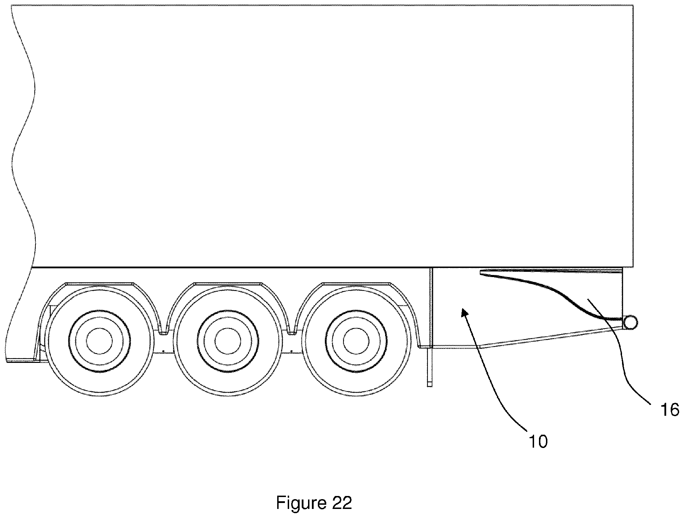

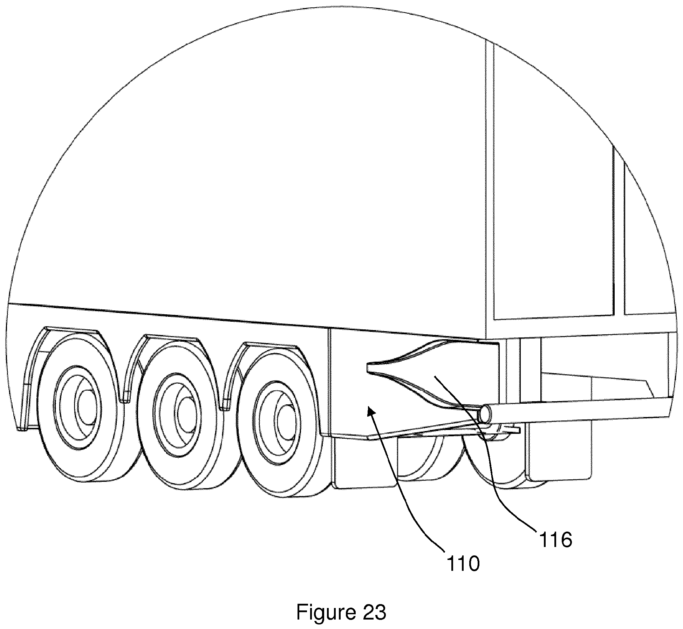

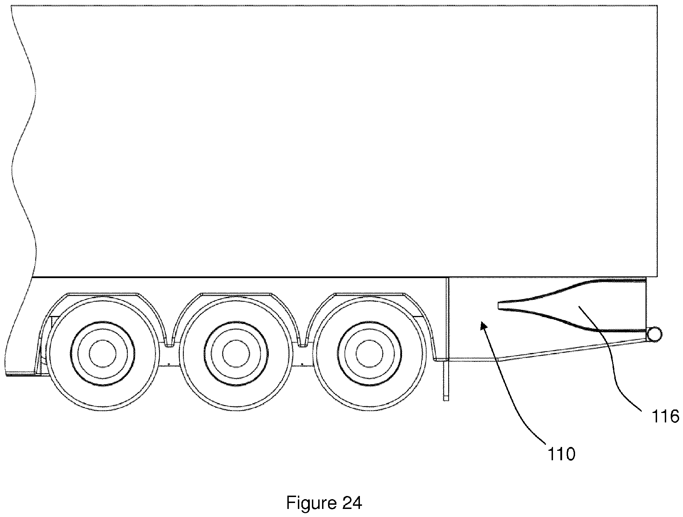

It will be understood that the invention also has application for non-articulated road haulage vehicles (e.g. road haulage vehicles having an integral tractor and trailer). Figures 21 to 24 show examples of such road haulage vehicles (which may or may not be articulated tractor/trailer units) incorporating panels 10, 110 of the kind described herein, with their recessed airflow regions 16, 116 located towards the rear of the vehicle, below the container body of the trailer, behind and generally in line with at least the rearmost wheels. The relative dimensions of each panel 10, 110 will be similar to those described above, for exemplary embodiments.

In some instances, the vehicle may not include a discrete panel *per se* at the rear end. Rather, the recessed region 16, 116 is formed in an integral part of the side of the vehicle, said integral part extending (e.g. to define a skirt) behind and generally in line with at least the rearmost wheels of the vehicle (e.g. of similar shape and dimensions to the panels 10, 110 described above).

Although described above with reference to road haulage vehicles, it will be further understood that the invention has application for other types of wheeled road vehicle, such as buses, coaches and vans etc., e.g. wherein the recessed region 16, 116 is formed in part of the side of the vehicle, said side extending (e.g. to define a skirt) behind and generally in line with at least the rearmost wheels of the vehicle. Although the dimensions and proportions of the recessed region (and the part of the side in which the recessed region is provided) will differ from vehicle to vehicle, the general principles and aspects of the shape will be similar to those described with reference to Figures 1 to 20.

## Claims

1. An aerodynamic panel (10) for use on a road haulage trailer, the panel having:
a first end (12), a second end (14), an upper edge (18), a lower edge (20), and
a recessed airflow region (16) located between said first and second ends (12, 14) and between said upper and lower edges (18, 20);
wherein the panel (10) has a front surface (32) intended to be upright in use;
wherein the recessed airflow region (16) includes a base wall (40) set back from said front surface (32) and extending from said front surface (32) towards said second end (14) of the panel (10);
wherein the recessed airflow region (16) includes an upper side wall (36), a lower side wall (38), and wherein the base wall (40) extends between said upper and lower side walls (36, 38),
wherein at least one of the upper side wall (36) or lower side wall (38) defines a curved surface extending the length of the recessed region (16);
wherein said curved surface has a width extending between said base wall (40) and said front surface (32), said width increasing along the length of the recessed region (16), in a direction towards said second end (14) of the panel (10), and
wherein the recessed airflow region (16) terminates at the second end (14) of the panel (10), to define an open end of channel-shaped cross-section.

2. A panel (10) according to claim 1, wherein the lower side wall (38) defines a curved surface extending the length of the recessed region (16), and wherein substantially the entire length of said curved surface defines a generally upward curvature, in a direction away from said second end (14) of the panel (10).

3. A panel (10) according to claim 1 or claim 2, wherein the depth of the recessed region (16) decreases along its length, in a direction from the second end (14) of the panel (10).

4. A panel (10) according to any preceding claim, wherein the lower edge (20) includes first and second plane surfaces (24, 26), said first plane surface (24) extending parallel with the upper edge (18), and the second plane surface (26) defining an upward slope towards said second end (14) of the panel (10).

5. A panel (10) according to claim 4, wherein the first and second plane surfaces (24, 26) of the lower edge (20) define first and second regions (28, 30) of the panel (10), respectively, the first region (28) adjacent said first end (12) of the panel (10), and the second region (30) adjacent the second end (14) of the panel (10), and wherein the recessed airflow region (16) is provided in said second region (30).

6. A panel (10) according to claim 5, wherein the recessed airflow region (16) extends for substantially the entire length of the second region (30).

7. A panel (10) according to any preceding claim, wherein the upper side wall (36) defines a straight surface, extending substantially along the entire length of the recessed airflow region (16), whereas the curvature of the lower side wall (38) follows a waveform which extends in a generally upward direction from said open end of the panel (10), such that the distance between said upper and lower side walls (36, 38) decreases along the length of said lower side wall (38) from said open end of the panel (10).

8. A panel (10) according to any of claims 5 to 7, wherein the base wall (40) of the recessed airflow region (16) is angled relative to the outer surfaces (32, 34) of the first and second regions (28, 30) of the panel.

9. A panel (10) according to any preceding claim, wherein the upper side wall (36) of the recessed airflow region (16) defines an overhang above the curved surface of the lower side wall (38).

10. A panel (10) according to any of claims 1 to 6, wherein the upper and lower side walls (36, 38) define opposing walls of said channel-shaped cross-section at said open end, and further wherein the upper and lower side walls (36, 38) cooperate to define a wish-bone shaped profile or periphery for said recessed airflow region (16).

11. A panel (10) according to any of claims 1 to 6, wherein the upper and lower side walls (36, 38) define opposing walls of said channel-shaped cross-section at said open end, and further wherein the upper and lower side walls (36, 38) each follow the curved profile, starting at the second end of the panel, and converging at a location distal the second end (14) of the panel (10).

12. A panel (10) according to any of claim 1 to 6, wherein the recessed airflow region (16) has a symmetrical profile.

13. A trailer for a road haulage vehicle, the trailer comprising:
a wheeled chassis and a box-type container body, the wheel chassis including at least one axle having a pair of wheels, so that one wheel is associated with each side of the trailer, and the container body defining two side walls of the trailer and a roof extending between the two side walls;
wherein the trailer further comprises a panel (10) according to any preceding claim, wherein the panel (10) is located on one side of the trailer, below the container body and behind the rearmost wheel on the respective side of the vehicle.

14. A road haulage vehicle, the vehicle comprising:
a wheeled chassis and a box-type container body, the wheel chassis including at least one axle having a pair of wheels, so that one wheel is associated with each side of the vehicle, and the container body defining two side walls of the vehicle and a roof extending between the two side walls;
wherein the vehicle further comprises a panel (10) according to any one of claims 1 to 12, wherein the panel is located on one side of the vehicle, below the container body and behind the rearmost wheel on the respective side of the vehicle, wherein the base wall (40) of said panel (10) extends from its front surface (32) to a distal end of the panel (10) at the rear end of the vehicle;
the width of the curved surface of said panel (10) increases in a direction towards the rear end of the vehicle;
and wherein the recessed region (16) of said panel defines an airflow outlet at the rear end of the vehicle, for directing a flow of air captured by the airflow region to a region behind the vehicle.

## Patentansprüche

1. Aerodynamisches Paneel zur Verwendung an einem Straßentransportanhänger, wobei das Paneel Folgendes aufweist:
ein erstes Ende (12), ein zweites Ende (14), einen oberen Rand (18), einen unteren Rand (20) und einen zurückstehenden Luftführungsbereich (16), der zwischen dem ersten und zweiten Ende (12,14) und zwischen dem oberen und unteren Rand (18,20) angeordnet ist;
wobei das Paneel eine Frontfläche (32) aufweist, die sich im Betrieb in vertikaler Lage befindet;
wobei der zurückstehende Luftführungsbereich (16) eine Basiswand (40) aufweist, die gegenüber der Frontfläche (32) zurückversetzt ist und sich von der Frontfläche aus gegen das zweite Ende des Paneels (10) erstreckt;
wobei der zurückstehende Luftführungsbereich (16) eine obere Seitenwand (36), eine untere Seitenwand (38) aufweist und wobei sich die Basiswand (40) zwischen der oberen und unteren Seitenwand (36,38) erstreckt;
wobei mindestens eine der oberen Seitenwand (36) oder der unteren Seitenwand (38) eine geschwungene Oberfläche bildet, die sich entlang des zurückstehenden Bereichs (16) erstreckt;
wobei die geschwungene Oberfläche eine Breite hat, die sich zwischen der Basiswand (40) und der Frontfläche (32) erstreckt,
wobei die Breite entlang der Länge des zurückstehenden Bereichs (16) in Richtung gegen das zweite Ende (14) des Paneels (10) zunimmt, und
wobei der zurückstehende Luftführungsbereich (16) an dem zweiten Ende (14) des Paneels (10) endet, um ein offenes Ende des kanalförmigen Querschnitts zu bilden.

2. Paneel (10) nach Anspruch 1, wobei die untere Seitenwand (38) eine geschwungene Oberfläche bildet, die sich entlang des zurückstehenden Bereichs (16) erstreckt, und wobei im Wesentlichen die gesamte Länge der geschwungenen Fläche eine hauptsächlich nach oben gerichtete Krümmung aufweist, und zwar in Richtung weg von dem zweiten Ende (14) des Paneels (10).

3. Paneel (10) nach Anspruch 1 oder 2, wobei die Tiefe des zurückstehenden Bereichs (16) über seine Länge abnimmt, und zwar in Richtung weg von dem zweiten Ende (14) des Paneels (10).

4. Paneel (10) nach einem der vorhergehenden Ansprüche, wobei der untere Rand (20) erste und zweite ebenen Flächen (24,26) umfasst, wobei die erste ebene Fläche (24) sich parallel zu dem oberen Rand (18) erstreckt und die zweite ebene Fläche (26) eine nach oben gerichtete Schräge zum zweiten Ende (14) des Paneels (10) bildet.

5. Paneel (10) nach Anspruch 4, wobei die erste und zweite ebene Fläche (24, 26) des unteren Randes (20) erste beziehungsweise zweite Bereiche (28, 30) des Paneels (10) bilden, wobei der erste Bereich (28) benachbart zu dem ersten Ende (12) des Paneels (10) und der zweite Bereich (30) benachbart zu dem zweiten Ende (14) des Paneels (10) liegt, und wobei der zurückstehende Luftführungsbereich (16) in dem zweiten Bereich (30) angeordnet ist.

6. Paneel (10) nach Anspruch 5, wobei der zurückstehende Luftführungsbereich (16) sich im Wesentlichen über die gesamte Länge des zweiten Bereichs (30) erstreckt.

7. Paneel (10) nach einem der vorhergehenden Ansprüche, wobei die obere Seitenwand (36) eine geradlinige Fläche bildet, die sich im Wesentlichen über die gesamte Länge des zurückstehenden Luftführungsbereichs (16) erstreckt, während die Krümmung der unteren Seitenwand (38) einem Kurvenverlauf folgt, der sich von dem offenen Ende des Paneels (10) aus hauptsächlich derart nach oben erstreckt, dass sich der Abstand zwischen der oberen und der unteren Seitenwand (36, 38) über die Länge der unteren Seitenwand (38) vom offenen Ende des Paneels (10) aus verringert.

8. Paneel (10) nach einem der Ansprüche 5 bis 7, wobei die Basiswand (40) des zurückstehenden Luftführungsbereichs (16) relativ zu den äußeren Flächen (32, 34) des ersten und zweiten Bereichs (28, 30) abgewinkelt ist.

9. Paneel (10) nach einem der vorhergehenden Ansprüche, wobei die obere Seitenwand (36) des zurückstehenden Luftführungsbereichs (16) einen Überhang über der geschwungenen Fläche der unteren Seitenwand (38) bildet.

10. Paneel (10) nach einem der Ansprüche 1 bis 6, wobei die oberen und unteren Seitenwände (36, 38) am offenen Ende gegenüberliegende Wände des kanalförmigen Querschnitts bilden und wobei ferner die oberen und unteren Seitenwände (36, 38) derart zusammenwirken, dass sie ein querlenkerartiges Profil oder Randbereich für den zurückstehenden Luftführungsbereich (16) bilden.

11. Paneel (10) nach einem der Ansprüche 1 bis 6, wobei die oberen und unteren Seitenwände (36, 38) am offenen Ende gegenüberliegende Wände des kanalförmigen Querschnitts bilden und wobei ferner die oberen und unteren Seitenwände (36, 38) einem geschwungenen Profil folgen, welches am zweiten Ende des Paneels beginnt und an einer von dem zweiten Ende (14) des Paneels (10) entfernten Stelle zusammenläuft.

12. Paneel (10) nach einem der Ansprüche 1 bis 6, wobei der zurückstehende Luftführungsbereich (16) ein symmetrisches Profil aufweist.

13. Anhänger für ein Straßentransportfahrzeug, wobei der Anhänger Folgendes umfasst:
ein mit Rädern versehenes Fahrgestell und einen kastenförmigen Aufbau, wobei das mit Rädern versehene Fahrgestell mindestens eine mit einem Räderpaar versehene Achse aufweist, sodass jede Seite des Anhängers mit einem Rad verbunden ist, und der kastenförmige Aufbau zwei Seitenwände des Anhängers und ein Dach bildet, das sich zwischen den beiden Seitenwänden erstreckt;
wobei der Anhänger ferner ein Paneel (10) nach einem der vorhergehenden Ansprüche aufweist, wobei das Paneel (10) auf einer Seite des Anhängers unterhalb des Aufbaus und hinter dem hintersten Rad auf der entsprechenden Seite des Fahrzeugs angeordnet ist.

14. Straßentransportfahrzeug, wobei das Fahrzeug Folgendes umfasst:
ein mit Rädern versehenes Fahrgestell und einen kastenförmigen Aufbau, wobei das mit Rädern versehene Fahrgestell mindestens eine mit einem Räderpaar versehene Achse aufweist, sodass jede Seite des Fahrzeugs mit einem Rad verbunden ist, und der kastenförmige Aufbau zwei Seitenwände des Fahrzeugs und ein Dach bildet, das sich zwischen den beiden Seitenwänden erstreckt;
wobei das Fahrzeug ferner ein Paneel (10) nach einem der Ansprüche 1 bis 12 aufweist, wobei das Paneel (10) auf einer Seite des Fahrzeugs unterhalb des Aufbaus und hinter dem hintersten Rad auf der entsprechenden Seite angeordnet ist, wobei sich die Basiswand (40) des Paneels (10) von ihrer Frontfläche (32)aus zu einem entfernten Ende des Paneels am hinteren Ende des Fahrzeugs erstreckt;
wobei die Breite der geschwungenen Fläche des Paneels (10) in Richtung auf das hintere Ende des Fahrzeugs zunimmt; und wobei der zurückstehende Bereich (16) des Paneels einen Luftführungsauslass am hinteren Ende des Fahrzeugs bildet, um einen Luftstrom, der von dem Luftführungsbereich eingefangen wird, zu einem Bereich hinter dem Fahrzeug zu leiten.

## Revendications

1. Panneau aérodynamique (10) destiné à être utilisé sur une remorque de transport routier, ce panneau comprenant :
une première extrémité (12), une seconde extrémité (14), un bord supérieur (18), un bord inférieur (20) et une région de circulation d'air en retrait (16) située entre la première extrémité et la seconde extrémité (12, 14) et entre le bord supérieur et le bord inférieur (18, 20),
le panneau (10) ayant une surface frontale (32) destinée à être orienté verticalement en cours d'utilisation,
la région de circulation d'air en retrait (16) comprenant une paroi de base (40) en recul par rapport à la surface frontale (32) et s'étendant à partir de la surface frontale (32) vers la seconde extrémité (14) du panneau (10),
la région de circulation d'air en retrait (16) comprenant une paroi latérale supérieure (36), une paroi latérale inférieure (38), et la paroi de base (40) s'étendant entre la paroi latérale supérieure et la paroi latérale inférieure (36, 38),
la paroi latérale supérieure (36) et/ou la paroi latérale inférieure (38) définissant une surface courbe s'étendant sur la longueur de la région en retrait (16),
la surface courbe ayant une largeur s'étendant entre la paroi de base (40) et la surface frontale (32), cette largeur augmentant le long de la longueur de la région en retrait (16) en direction de la seconde extrémité (14) du panneau (10), et
la région de circulation d'air en retrait (16) se terminant au niveau de la seconde extrémité (14) du panneau (10) pour définir une extrémité ouverte ayant une section transversale en forme de canal.

2. Panneau (10) conforme à la revendication 1,
dans lequel la paroi latérale inférieure (38) définit une surface courbe s'étendant sur la longueur de la région en retrait (16), et essentiellement la totalité de la longueur de cette surface courbe ayant une courbure essentiellement orientée vers le haut en s'éloignant de la seconde extrémité (14) du panneau (10).

3. Panneau (10) conforme à la revendication 1 ou 2
dans lequel la profondeur de la région en retrait (16) diminue le long de sa longueur à partir de la seconde extrémité (14) du panneau (10).

4. Panneau (10) conforme à l'une quelconque des revendications précédentes,
dans lequel le bord inférieur (20) comporte une première surface plane et une seconde surface plane (24, 26), la première surface plane (24) s'étendant parallèlement au bord supérieur (18) et la seconde surface plane (26) ayant une pente ascendante vers la seconde extrémité (14) du panneau (10).

5. Panneau (10) conforme à la revendication 4,
dans lequel la première surface plane et la seconde surface plane (24, 26) du bord inférieur (20) définissent respectivement une première région et une seconde région (28, 30) du panneau (10), la première région (28) étant adjacente à la première extrémité (12) du panneau (10) et la seconde région (30) étant adjacente à la seconde extrémité (14) du panneau (10), et la région de circulation d'air en retrait (16) étant située dans la seconde région (30).

6. Panneau (10) conforme à la revendication 5,
dans lequel la région de circulation d'air en retrait (16) s'étend sur essentiellement la totalité de la longueur de la seconde région (30).

7. Panneau (10) conforme à l'une quelconque des revendications précédentes,
dans lequel la paroi latérale supérieure (36) définit une surface rectiligne s'étendant essentiellement le long de la totalité de la longueur de la région de circulation d'air en retrait (16) tandis que la courbure de la paroi latérale inférieure (38) suit une forme ondulée qui s'étend essentiellement vers le haut à partir de l'extrémité ouverte du panneau (10) de sorte que la distance entre la paroi latérale supérieure et la paroi latérale inférieure (36, 38) diminue le long de la longueur de la paroi latérale inférieure (38) à partir de l'extrémité ouverte du panneau (10).

8. Panneau (10) conforme à l'une quelconque des revendications 5 à 7, dans lequel la paroi de base (40) de la région de circulation d'air en retrait (16) est inclinée par rapport aux surfaces externes (32, 34) de la première région et de la seconde région (28, 30) du panneau.

9. Panneau (10) conforme à l'une quelconque des revendications précédentes,
dans lequel la paroi latérale supérieure (36) de la région de circulation d'air en retrait (16) définit un surplomb au-dessus de la surface courbe de la paroi latérale inférieure (38).

10. Panneau (10) conforme à l'une quelconque des revendications 1 à 6,
dans lequel la paroi latérale supérieure et la paroi latérale inférieure (36, 38) définissent des parois opposées de la section transversale en forme de canal au niveau de l'extrémité ouverte et en outre, la paroi latérale supérieure et la paroi latérale inférieure (36, 38) coopèrent pour définir un profil ou une périphérie en forme de wish-bone pour la région de circulation d'air en retrait (16).

11. Panneau (10) conforme à l'une quelconque des revendications 1 à 6,
dans lequel la paroi latérale supérieure et la paroi latérale inférieure (36, 38) définissent des parois opposées de la section transversale en forme de canal au niveau de l'extrémité ouverte et en outre la paroi latérale supérieure et la paroi latérale inférieure (36, 38) suivent chacune un profil courbe, en commençant au niveau de la seconde extrémité du panneau et en convergeant au niveau d'un emplacement distal par rapport à la seconde extrémité (14) du panneau (10).

12. Panneau (10) conforme à l'une quelconque des revendications 1 à 6,
dans lequel la région de circulation d'air en retrait (16) a un profil symétrique.

13. Remorque destinée à un véhicule de transport routier, comprenant :
un châssis équipé de roues et un corps de conteneur de type caisson, le châssis équipé de roues comprenant au moins un essieu ayant une paire de roues de sorte qu'une roue soit associée à chaque côté de la remorque, et le corps de conteneur définit deux parois latérales de la remorque et un toit s'étendant entre les deux parties latérales,
la remorque comprenant en outre un panneau (10) conforme à l'une quelconque des revendications précédentes, ce panneau (10) étant situé sur un côté de la remorque en dessous du corps de conteneur et à l'arrière de la roue la plus en arrière sur le côté respectif du véhicule.

14. Véhicule de transport routier comprenant :
un châssis équipé de roues et un corps de conteneur de type caisson, le châssis équipé de roues comprenant au moins un essieu ayant une paire de roues de sorte qu'une roue soit associée à chaque côté du véhicule, et le corps de conteneur définissant deux parois latérales du véhicule et un toit s'étendant entre les deux parois latérales,
le véhicule comprenant en outre un panneau (10) conforme à l'une quelconque des revendications 1 à 12, ce panneau étant situé sur un côté du véhicule, en dessous du corps de conteneur et à l'arrière de la roue la plus en arrière sur le côté respectif du véhicule, la paroi de base (40) du panneau (10) s'étendant de la surface frontale (32) vers une extrémité distale du panneau (10) au niveau de l'extrémité arrière du véhicule,
la largeur de la surface courbe du panneau (10) augmentant vers l'extrémité arrière du véhicule, et la région en retrait (16) du panneau définissant une sortie de circulation d'air au niveau de l'extrémité arrière du véhicule pour orienter un flux d'air capté par la région de circulation d'air vers une région située à l'arrière du véhicule.
